**Europäisches Patentamt**

**European Patent Office**

**Office européen des brevets**

(19)

(11) Veröffentlichungsnummer: **0 302 369**
**B1**

## (12) EUROPÄISCHE PATENTSCHRIFT

(45) Veröffentlichungstag der Patentschrift:
**10.10.90**

(21) Anmeldenummer: **88112094.3**

(22) Anmeldetag: **27.07.88**

(51) Int. Cl.⁵: **B29C 63/38,** H02G 15/192

(54) **Verfahren und Vorrichtung zum Bilden einer dichten Verbindung zwischen einer wärmegeschrumpften Muffe und wenigstens zwei langgestreckten Substraten.**

(30) Priorität: **06.08.87 DE 3726062**

(43) Veröffentlichungstag der Anmeldung:
**08.02.89 Patentblatt 89/6**

(45) Bekanntmachung des Hinweises auf die Patenterteilung:
**10.10.90 Patentblatt 90/41**

(84) Benannte Vertragsstaaten:
**AT BE CH DE ES FR GB IT LI NL SE**

(56) Entgegenhaltungen:
**EP-A- 0 056 080**
**EP-A- 0 094 242**
**US-A- 4 246 687**
**US-A- 4 410 379**
**US-A- 4 458 104**

(73) Patentinhaber: **KABELMETAL ELECTRO GMBH,**
**Kabelkamp 20 Postfach 260, D-3000 Hannover 1(DE)**

(72) Erfinder: **Marx, Karl-Heinz, Zehntweg 25,**
**D-3008 Garbsen 9(DE)**

**Beschreibung**

Die Erfindung betrifft ein Verfahren zum Bilden einer dichten Verbindung zwischen einer wärmegeschrumpften Muffe und wenigstens zwei langgestreckten Substraten, wobei im Eintrittsbereich der Substrate in die Muffe die Muffe an der Außenfläche der Substrate weitestgehend anliegt, bei dem die Substrate in einer wärmeschrumpfbaren Hülle angeordnet werden und zwischen den Substraten zwei Bereiche der Wandung der Hülle einander gegenüberliegen, bei dem die Hülle erwärmt wird und bei dem der Eintrittsbereich der Muffe zwischen den Substraten durch Annähern der Wandungsbereiche verformt wird, um Kanäle für die Substrate zu bilden.

Aus der DE-PS 2 900 518 ist ein Verfahren zum Abzweigen elektrischer Kabel bekannt, bei dem die Abzweigstelle von einer wärmerückstellbaren Hülle umgeben wird, die durch Wärme auf die Abzweigstelle heruntergeschrumpft wird. Zum Abdichten des Eintirttsbereichs der abzweigenden Kabel wird vor dem Schrumpfen zwischen den Substraten eine Klammer eingebracht, die mit ihren Schenkeln die Hülle übergreift und dadurch Kanäle für die abzweigenden Kabel bildet. Die Hülle besteht aus einem Kunststoffband, welches an seinen Länskanten je ein Profil aufweist. Nach dem Herumlegen der Hülle um die Abzweigstelle wird über die Profile eine Schiene geschoben. Diese Art der Umhüllung von Abzweigverbindungen hat sich auf dem Markt durchgesetzt.

Ein wesentlicher Nachteil dieses bekannten Verfahrens besteht jedoch darin, daß beim Wärmeschrumpfen die Klammern von der Hülle abspringen. Man hat versucht, diesen Nachteil zu beheben, indem man die auf die Hülle gerichteten Oberflächen der Klammerschenkel profiliert ausgebildet hat. Dadurch wurde jedoch auch das Aufschieben der Klammer erschwert und es entstanden höhere Kosten für die Klammer.

Aus der EP-A 0 056 080 ist ein längsgeteiltes Muffenrohr aus thermoplastischem Kunststoff bekannt, das an den Längsrändern entlang der Teilungslinie Verschlußelemente zum Bilden eines Muffenrohres aufweist. Die Verschlußelemente sind als Haken- und Rastelemente ausgebildet. Um ein Herausreißen der Verschlußelemente beim Schrumpfen zu vermeiden, sind die Verschlußelemente an mechanischen Verstärkungen angeordnet. Diese mechanischen Verstärkungen sind nachteilig, da sie das Muffenrohr an diesen Stellen im Durchmesser größer machen. Das Probelm der Abdichtung des Bereiches zwischen zwei langgestreckten Substraten ist nicht angesprochen.

Der vorliegenden Erfindung liegt von daher die Aufgabe zugrunde, das eingangs erwähnte Verfahren so auszugestalten, daß die Bildung der Kanäle bis nach dem Schrumpfen aufrechterhalten bleibt.

Diese Aufgabe wird durch die Kombination folgender Merkmale gelöst:

a) als Material für die Hülle wird ein Kunststoffband mit mindestens einer innerhalb der Wandung der Hülle angeordneten Gewebeeinlage verwendet,

b) die Verformung der Muffe im Eintrittsbereich erfolgt durch mindestens ein von einer Seite durch beide Wandungen hindurchgeführtes Steckelement, welches auf der anderen Seite der zweiten Wandung bzw. in einem Hohlteil oder mittels eines Hohlteils selbsthemmend festgelegt wird.

Der wesentliche Vorteil des erfindungsgemäßen Verfahrens ist darin zu sehen, daß mit einfachen Mitteln in überraschender Weise ein dichter Abschluß zwischen zwei abzweigenden Substraten z.B. elektrischen Kabeln im Bereich der Muffe erzielt werden kann. Da innerhalb der Wandung der Hülle eine Gewebeeinlage befindlich ist, ist das Material der Hülle reißfest, so daß ein Einreißen der Hülle beim Wärmeschrumpfen im Bereich der Löcher für die Steckelemente nicht befürchtet werden muß. Die Anzahl der Steckelemente hängt von der Länge der zu bildenden Kanäle ab. Der Abstand zwischen zwei Steckelementen sollte zwischen 30 und 60 mm liegen. Eine Schwächung der Hülle ist dadurch nicht zu erwarten, die Dichtwirkung ist ausreichend.

Nach einer besonders vorteilhaften Weiterbildung der Erfindung verbleiben bei der Verformung der Muffe im Eintrittsbereich die Wandungen der Hülle mit einem Abstand zueinander, wobei der Abstand beim nachfolgenden Schrumpfen durch die Wanddickenzunahme der Hüllenwandung nahezu ausgefüllt wird. Dadurch wird erreicht, daß die selbsthemmend festgelegten Steckelemente beim Schrumpfen nicht gelöst werden.

Es hat sich als vorteilhaft erwiesen, daß vor dem Schrumpfen vorzugsweise vor der Verformung der Muffe im Eintrittsbereich zwischen die Substrate in den Eintrittsbereich ein Streifen oder Block aus Heißschmelzkleber eingebracht wird. Dieser Streifen oder Block dessen Höhe in etwa der zweifachen Wanddickenzunahme der Hülle beim Schrumpfen entspricht, dient einmal als Abstandshalter und zum anderen als Dichtmasse, welche beim Schrumpfen die Hohlräume zwischen den Substraten und der Hülle ausfüllt. Der Heißschmelzkleber wird bei Schrumpftemperatur weich und wird durch die bei der Wanddickenzunahme auf ihn einwirkenden Kräfte seitwärts verdrängt. Wird ein beidseitig mit Heißschmelzkleber beschichtetes Metallblech verwendet, so resultiert daraus der Vorteil, daß der Heißschmelzkleber beim Schrumpferwärmen durch das bessere Wärmeleitvermögen des Metallblechs schneller aktiviert und plastisch wird.

Es hat sich als zweckmäßig erwiesen, daß das Steckelement oder die Steckelemente und/oder das Hohlteil oder die Hohlteile durch vorgefertigte Löcher in der Hülle hindurchgeführt wird bzw. werden. Die Löcher werden zweckmäßigerweise durch im Handel befindliche Lochzangen an der Montagestelle hergestellt. Bei geeigneter Ausgestaltung der Steckteile ist es jedoch auch möglich, daß die Löcher durch die Steckelemente und/oder Hohlteile erzeugt werden. Auf eine glatte Ausbildung des Lochrandes braucht nicht geachtet zu werden, da die Gewebeeinlage ein Einreißen der Hülle verhindert.

In Weiterführung der Erfindung hat es sich als zweckmäßig erwiesen, daß beim Wärmeschrumpfen zunächst der verformte Bereich der Hülle im Bereich der Steckteile und/oder Hohlteile geschrumpft wird. Dadurch wird der Heißschmelzkleber an dieser Stelle aktiviert und seitwärts verdrängt und füllt somit die Hohlräume einwandfrei aus. Darüberhinaus werden die durch die Steckelemente in Berührung miteinander gebrachten Oberflächen der Hülle miteinander verklebt und übernehmen nach der Aktivierung des Heißschmelzklebers und nach dem Abkühlen einen Teil der auf diesen Bereich beim Schrumpfen der Hülle einwirkenden Kräfte.

Damit eine gute Verteilung der Wärme in diesen Bereich gewährleistet wird, werden zweckmäßigerweise durch die Steckteile und/oder die Hohlteile Metallplatten auf den nach außen weisenden Flächen der Hülle festgelegt. Diese Metallteile, die mit Bohrungen zum Durchführen der Steckteile versehen sind, dienen gleichzeitig dazu, für die Köpfe der Steckteile und/oder Hohlteile eine mechanisch feste Auflage zu bilden. Eine der Metallplatten kann dabei anstelle des Hohlteiles verwendet werden, in dem beispielsweise das Steckteil mittels der Bohrung mit der Metallplatte verbunden wird, wie weiter unten beschrieben wird.

Die Erfindung betrifft weiterhin eine Vorrichtung zum Bilden einer dichten Verbindung zwischen einer wärmegeschrumpften Muffe und wenigstens zwei langgestreckten Substraten, bei der im Eintrittsbereich der Substrate in die Muffe eine die Muffe bildende wärmeschrumpfbare Hülle an der Außenfläche der Substrate weitestgehend anliegt und die zwischen den Substraten gelegenen Bereiche der Hülle durch geeignete Mittel derart verformt sind, daß Kanäle für die Substrate gebildet sind, die dadurch gekennzeichnet ist, daß die Mittel aus zumindest einem Steckteil mit Kopf und Schaft bestehen, wobei der Schaft an seiner äußeren Oberfläche Mittel zum selbsthemmenden Festlegen mit einem Hohlteil aufweist. Diese selbsthemmenden Mittel sind vorzugsweise ringförmige am Schaft des Steckteils angeordnete umlenkbare Elemente. Die Öffnung des Hohlteiles weist entsprechende ringförmige Nuten auf, in welche die umlenkbaren Elemente beim Zusammenstecken einrasten.

Alternativ kann der Schaft des Steckteils nach Art eines Spreizdübels ausgebildet sein. Die Öffnung des Hohlteils ist dann in ihrem Durchmesser so bemessen, daß eine am freien Ende des Schaftes befindliche Durchmessererweiterung im gespreizten Zustand größer ist als der Durchmesser der Öffnung.

Das Hohlteil kann eine Metallplatte oder auch eine entsprechend stabile Kunststoffplatte mit mindestens einer Bohrung sein. Eine solche Platte vergrößert die Fläche für die Rückhaltekraft beim Schrumpfen. Es besteht auch die Möglichkeit, daß das Hohlteil auf den Schaft aufgeschraubt ist. Es sind Kunststoffschrauben auf dem Markt erhältlich, die mit einem relativ großflächigen Schraubenkopf versehen sind. Auch die das Hohlteil bildende entsprechende Schraubenmutter besteht aus Kunststoff und hat einem entsprechend großen Kopf.

Wesentlich ist, daß die Verbindungselemente Steckteil und Hohlteil aus einem Werkstoff bestehen, der temperaturbeständig ist, d. h. Kräfte auch bei Temperaturen von in etwa 125 Grad C übertragen kann. Als Werkstoffe bieten sich Kunststoffe z. B. Polyamid, Polypropylen, vernetztes Polyethylen etc an.

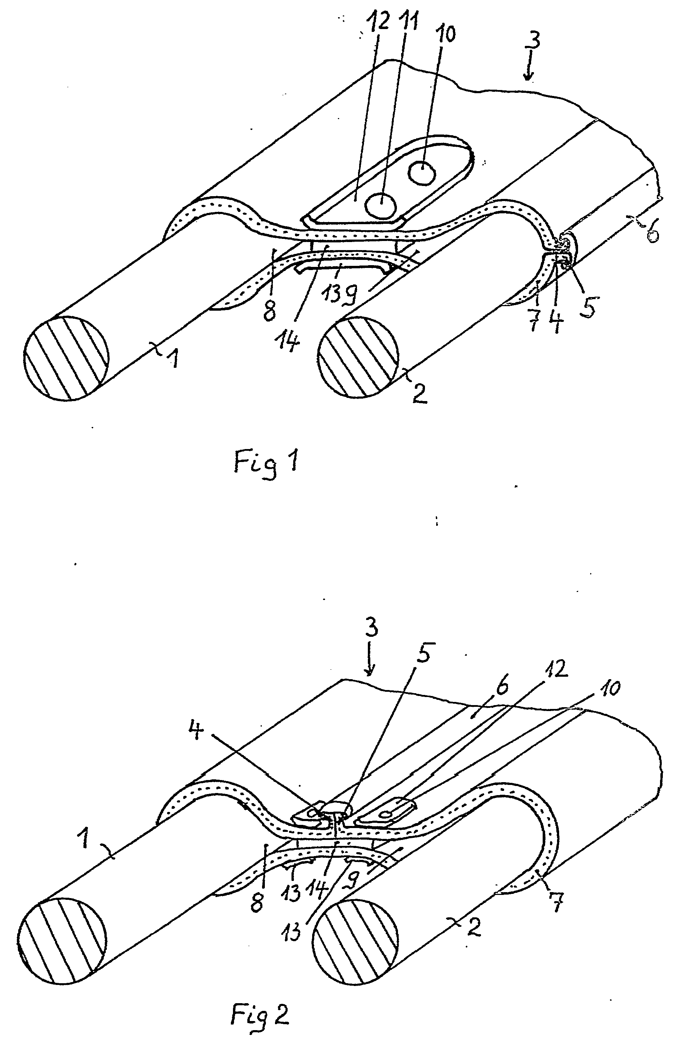

Die Erfindung ist an Hand der in den Figuren 1 bis 6 schematisch dargestellten Ausführungsbeispiele näher erläutert.

In den Figuren 1 und 2 sind zwei Ausführungsbeispiele einer Abzweigstelle in perspektivischer Darstellung gezeigt.

Hierin sind mit 1 und 2 zwei elektrische Kabel bezeichnet, die aus einem nicht mehr dargestellten Kabel in an sich bekannter Weise abgezweigt sind. Zur Abdichtung der Abzweigstelle wird um diese eine Hülle 3 aus einem wärmeschrumpfbaren Kunststoff herumgelegt, die an ihren mit Stegen 4 und 5 versehenen Längskanten mittels einer Schiene 6 verbunden sind. Die Hülle 3 besteht aus einem vernetzten Polyethylen und ist bei einer Temperatur oberhalb des Kristallitschmelzpunktes des vernetzten Polyethylens gereckt und wird im gerecktem Zustand abgekühlt. Innerhalb der Wandung der Hülle 3 ist eine Gewebeeinlage 7 angeordnet, welche die Reißfestigkeit der Hülle 3 insbesondere bei erhöhter Temperatur z. B. der Schrumpftemperatur verbessern soll. Die Gewebeeinlage 7 kann durch Kaschieren auf ein gerecktes Polyethylenband mit diesem verbunden werden. Günstiger ist es jedoch, die Hülle 3 mit der Gewebeeinlage durch Koextrusion herzustellen, d. h. die Gewebeeinlage wird in einem nicht dargestellten Extruder in kontinuierlicher Weise entweder auf einer Seite oder beiderseits mit Polyethylen beschichtet. Bei dieser Vorgehensweise ist es erforderlich, daß die Gewebeeinlage 7 dehnbar ist und die beim Recken der Hülle 3 auftretende Längung mitmacht. Dazu ist es erforderlich, daß die Gewebeeinlage 7 entweder aus einem elastisch verformbaren Werkstoff z. B. einem gummielastischen Werkstoff oder aber aus einem sog. Gewölk besteht, bei dem eine Vielzahl von nicht verformbaren Einzelfäden z. B. aus Baumwolle lose miteinander verbunden sind. Als Grundwerkstoff für die Hülle 3 wird vorteilhafterweise ein Polyethylen verwendet, dem Silane aufgepfropft sind und welches dadurch bei Anwesenheit von Feuchtigkeit vernetzbar ist.

Nach dem herumlegen der Hülle 3 um die Abzweigstellen und dem Aufschieben der Verschlußschiene 6 werden für die Abzweigkabel 1 und 2 im Eintrittsbereich Kanäle 8 und 9 gebildet. Hierzu werden durch die übereinanderliegenden Wandungen der Hülle mit einem geeigneten nicht dargestellten Lochwerkzeug Löcher eingebracht und Steckelemente 10 und 11 durch die Löcher hindurchgeführt. Diese Steckelemente 10 und 11 sind wie weiter unten beschrieben, selbsthemmend, so daß sie nicht durch die beim Wärmeschrumpfen auftretenden Kräfte aus den Löchern herausgezogen werden können. Durch die Gewebeeinlage 7 wird sichergestellt, daß die Hülle 3 auch im Bereich der Löcher beim nachfolgenden Wärmeschrumpfen nicht einreißt. Zwischen den Steckelementen 10 und 11 sowie der Hülle 3 ist eine Metallplatte 12 angeordnet, die als Kraftaufnahme für die Steckelemente 10 und 11 dient. Auf der gegenüberliegenden Seite ist eine gleichgeartete Metallplatte 13 angeordnet, die in nicht erkennbarer Weise ebenfalls Löcher aufweist, in welchen die Steckelemente 10 und 11 selbsthemmend festgelegt sind.

Die den Abzweigkabeln 1 und 2 zugekehrte Oberfläche der Hülle 3 ist in an sich bekannter Weise mit einem Heißschmelzkleber beschichtet, der beim Wärmeschrumpfen aktiviert wird und die Zwischenräume zwischen den Abzweigkabeln 1 und 2 sowie der Hülle im Eintrittsbereich abdichtet. Die Platten 12 und 13, die auch aus einem temperaturbeständigen Kunststoff bestehen können, weisen an ihren Randbereichen eine nicht näher bezeichnete Abkantung auf, welche eine Beschädigung der Hülle durch scharfe Kanten vermeiden sollen. In den Eintrittsbereich kann noch ein Block 14 aus einem Heißschmelzkleber eingebracht sein, der für eine zusätzliche Abdichtung sorgen soll. Alternativ kann ein dünnes Metallblech verwendet werden, welches mit Heißschmelzkleber beschichtet ist, eingeführt werden. Das Metallblech sorgt für eine schnellere Erwärmung des Heißschmelzklebers beim Wärmeschrumpfen, wenn dieses, wie es besonders vorteilhaft erscheint, aus der Muffe herausragt, so daß eine Wärmeaufnahme erfolgen kann.

Die Steckelemente 10 und 11 werden nur soweit eingesteckt, daß wie in den Figuren dargestellt, vor dem Schrumpfen ein Freiraum verbleibt, der durch die Wanddickenzunahme der Hülle 3 beim Wärmeschrumpfen ausgefüllt wird. Da durch das Wärmeschrumpfen auch der innere Durchmesser der Löcher für die Steckelemente 10 und 11 geringer wird, werden diese durch das Schrumpfen innerhalb der Löcher zusätzlich festgelegt. Beim Schrumpfen sollte zunächst der Bereich, in dem sich die Steckelemente 10 und 11 befinden, erwärmt und damit zum Schrumpfen gebracht werden.

Die Figur 1 zeigt ein Ausführungsbeispiel, bei dem die Verschlußscheine 6 seitlich gelegen ist. In diesem Fall reicht eine Reihe Steckelemente 10 und 11, um die Kanäle 8 und 9 zu bilden. In der Figur 2 ist die Verschlußschiene 6 mittig zwischen den Abzweigkabeln 1 und 2 angeordnet. Für diese Ausgestaltung hat es sich als vorteilhaft erwiesen, zwei Reihen von Steckelementen 10 und 11 vorzusehen, die beiderseits der Verschlußschiene 6 angeordnet werden.

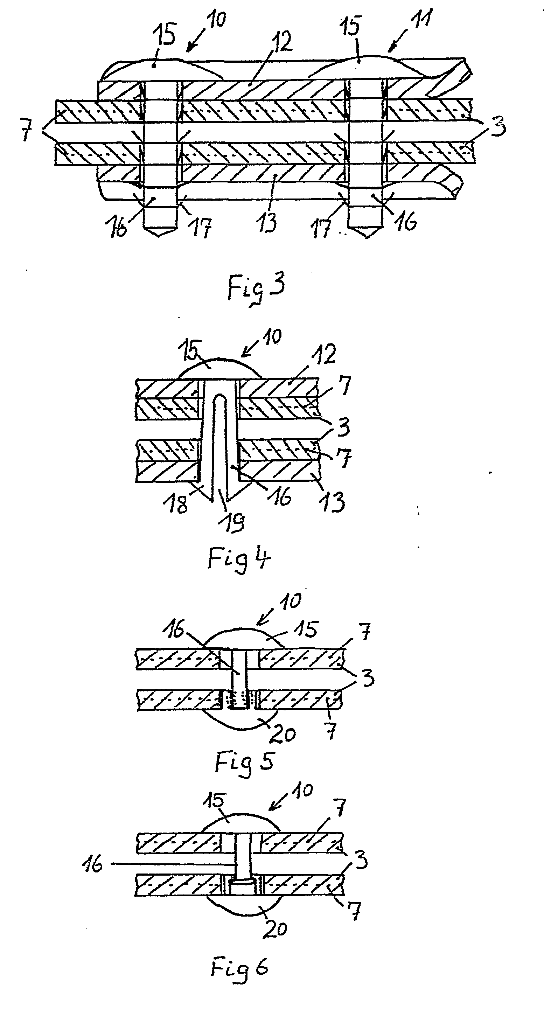

Die Figuren 3 bis 6 zeigen verschiedene Ausgestaltungen der Steckelemente 10 und 11 sowie von Hohlteilen, mit deren Hilfe die Steckelemente 10 und 11 selbsthemmend festgelegt sind.

In der Figur 3 bestehen die Steckelemente 10 und 11 aus je einem Kopf 15 und einem Schaft 16. Der Schaft 16 weist eine Vielzahl von ringförmigen umlenkbaren Vorsprüngen 17 auf, die beim Durchstecken des Schaftes 16 durch die Löcher der Platte 12, der Hülle 3 und der Platte 13 an den Schaft 16 gelenkt werden und beim Verlassen der Löcher sich spreizen und somit ein Zurückziehen des Schaftes 16 verhindern.

In der Figur 4 ist der Schaft 16 nach Art eines Spreizdübels ausgebildet. An seinem Ende weist der Schaft eine Durchmesserverdickung 18 auf, die mit Hilfe des Schlitzes 19 im Schaft 16 während des Hindurchsteckens auf den Durchmesser der Löcher in der Platte 12, der Hülle 3 und der Platte 14 reduziert werden kann und nach dem Austritt aus dem Loch der Platte 14 zurückfedert, so daß sie über den Rand des Loches in der Platte 14 greift.

Bei dem Ausführungsbeispiel nach Figur 5 trägt das Steckelement 10 bzw. 11 an seinem Schaftende ein nicht näher bezeichnetes Gewinde, auf welches ein Hohlteil 20 mittels eines ebenfalls nicht näher bezeichneten Gewindes aufgeschraubt werden kann. Hier wird auch verdeutlicht, daß bei genügend großer Ausgestaltung des Kopfes 15 des Steckelementes 10 bzw. 11 und des Kopfes des Hohlteils 20 auf die Platten 13 und 14 ggfs verzichtet werden kann. Solche Schraubteile sind auf dem Markt erhältlich. Nach Figur 6 ist ebenfalls ein Hohlteil 20 vorgesehen, in welches das verdickte Ende des Schaftes 16 eindringt. Durch nicht näher bezeichnete Schlitze im Hohlteil 20 kann dieses gespreizt werden und ein Eindringen des verdickten Endes ermöglicht werden. Nach dem Zurückfedern der aufgespreizten Teile des Hohlteils 20 ist das verdickte Ende des Schaftes 16 festgelegt.

Die Steckelemente 10 und 11 und die Hohlteile 20 bestehen zweckmäßigerweise aus einem wärmebeständigen Kunststoff, d. h. einem Kunststoff, der bei Schrumpftemperatur von ca 125 Grad C noch eine ausreichende Festigkeit aufweist. Geeignete Werkstoffe sind Polyamide oder auch Polypropylen.

## Patentansprüche

1. Verfahren zum Bilden einer dichten Verbindung zwischen einer wärmegeschrumpften Muffe und wenigstens zwei langgestreckten Substraten (1, 2), wobei im Eintrittsbereich der Substrate (1, 2) in die Muffe die Muffe an der Außenfläche der Substrate (1, 2) weitestgehend anliegt, bei dem die Substrate (1, 2) in einer wärmeschrumpfbaren Hülle (3) angeordnet werden und zwischen den Substraten (1, 2) zwei Bereiche der Wandung der Hülle (3) einander gegenüberliegen, bei dem die Hülle (3) erwärmt wird und bei dem der Eintrittsbereich der Muffe zwischen den Substraten (1, 2) durch Annähern der Wandungsbereiche verformt wird, um Kanäle (8, 9) für die Substrate (1, 2) zu bilden, gekennzeichnet durch die Kombination folgender Merkmale

a. als Material für die Hülle (3) wird ein Kunststoffband mit mindestens einer innerhalb der Wandung der Hülle (3) angeordneten Gewebeeinlage (7) verwendet

b. die Verformung der Muffe im Eintrittsbereich erfolgt durch mindestens ein von einer Seite durch beide Wandungen hindurchgeführtes Steckelement (10, 11), welches auf der anderen Seite der zweiten Wandung bzw. in einem Hohlteil oder mittels eines Hohlteils selbsthemmend festgelegt wird.

2. Verfahren nach Anspruch 1, dadurch gekennzeichnet, daß bei der Verformung der Muffe im Eintrittsbereich die Wandungen der Hülle (3) mit einem Abstand zueinander verbleiben und daß der Abstand beim nachfolgenden Schrumpfen durch die Wanddickenzunahme der Wandung der Hülle (3) nahezu ausgefüllt wird.

3. Verfahren nach Anspruch 1 oder 2, dadurch gekennzeichnet, daß vor dem Schrumpfen vorzugsweise vor der Verformung der Muffe im Eintrittsbereich zwischen die Substrate (1, 2) in den Eintrittsbereich ein Streifen oder Block aus Heißschmelzkleber eingebracht wird.

4. Verfahren nach Anspruch 1 oder einem der folgenden, dadurch gekennzeichnet, daß das Steckelement (10, 11) oder die Steckelemente (10, 11) und/oder das Hohlteil oder die Hohlteile durch vorgefertigte Löcher in der Hülle (3) hindurchgeführt wird bzw. werden.

5. Verfahren nach Anspruch 1 oder einem der folgenden, dadurch gekennzeichnet, daß die Löcher durch die Steckteile (10, 11) und/oder Hohlteile erzeugt werden.

6. Verfahren nach Anspruch 1 oder einem der folgenden, dadurch gekennzeichnet, daß beim Wärmeschrumpfen zunächst der verformte Bereich der Hülle (3) im Bereich der Steckteile (10, 11) und/oder Hohlteile geschrumpft wird.

7. Verfahren nach Anspruch 1 oder einem der folgenden, dadurch gekennzeichnet, daß durch die Steckteile (10, 11) und/oder die Hohlteile Metallplatten (12, 13) auf den nach außen weisenden Flächen der Hülle (3) festgelegt werden.

8. Vorrichtung zum Bilden einer dichten Verbindung zwischen einer wärmegeschrumpften Muffe und wenigstens zwei langgestreckten Substraten (1, 2), bei der im Eintrittsbereich der Substrate (1, 2) in die Muffe eine die Muffe bildende wärmeschrumpfbare Hülle (3) an der Außenfläche der Substrate weitestgehend anliegt und die zwischen den Substraten (1, 2) gelegenen Bereiche der Hülle (3) durch geeignete Mittel (10, 11) derart verformt sind, daß Kanäle (8, 9) für die Substrate (1, 2) gebildet sind, dadurch gekennzeichnet, daß die Mittel aus zumindest einem Steckteil (10, 11) mit Kopf (15) und Schaft (16) bestehen, wobei der Schaft (16) an der äußeren Oberfläche Mittel (17, 18) zum selbsthemmenden Festlegen mit einem Hohlteil (13) aufweist.

9. Vorrichtung nach Anspruch 8, dadurch gekennzeichnet, daß am Schaft (16) des Steckteils (10, 11) mehrere ringförmige umlenkbare Elemente (17) angeordnet sind, und daß die Öffnung des Hohlteils (13) entsprechende ringförmige Nuten aufweist, in welche die unlenkbaren Elemente (17) beim Zusammenstecken einrasten.

10. Vorrichtung nach Anspruch 8, dadurch gekennzeichnet, daß der Schaft (16) des Steckteils (10, 11) nach Art eines Spreizdübels (18, 19) ausgebildet ist und daß die Öffnung des Hohlteils (13) in ihrem Durchmesser so bemessen ist, daß eine am freien Ende des Schaftes (16) befindliche Durchmessererweiterung (18) im gespreizten Zustand größer ist als der Durchmesser der Öffnung.

11. Vorrichtung nach Anspruch 8 oder einem der folgenden, dadurch gekennzeichnet, daß das Hohlteil eine Metallplatte (12, 13) mit mindestens einer Bohrung ist.

12. Vorrichtung nach Anspruch 8, dadurch gekennzeichnet, daß das Hohlteil (20) auf den Schaft (16) aufgeschraubt ist.

13. Vorrichtung nach Anspruch 8 oder einem der folgenden, dadurch gekennzeichnet, daß das Steckteil (10, 11) und/oder Hohlteil (20) aus einem Kunststoff mit einer Erweichungstemperatur, die höher als die Schrumpftemperatur liegt, besteht.

**Revendications**

1. Procédé de fabrication d'une liaison étanche entre un manchon se rétractant à la chaleur et au moins deux substrats allongés (1, 2), dans lequel ledit manchon est ajusté tout autour des substrats à l'entrée des substrats (1, 2) dans le manchon, les substrats sont disposés dans une enveloppe (3) se rétractant à la chaleur, deux parties de parois de l'enveloppe (3) sont disposées en regard entre les substrats (1, 2), l'enveloppe (3) est chauffée et l'entrée du manchon entre les substrats (1, 2) est déformée par rapprochement des parties de parois, afin de former des canaux (8, 9) pour les substrats caractérisé par la combinaison des caractéristiques suivantes:

a) On utilise comme matériau pour l'enveloppe (3) une bande de plastique avec au moins un tissu (7) à l'intérieur de la paroi de l'enveloppe (3).

b) La déformation de l'entrée du manchon se produit grâce à au moins à une fiche qui peut être enfoncée à partir d'un côté à travers les deux parois, et qui de l'autre côté de la deuxième paroi se bloque dans une partie creuse ou grâce à une partie creuse.

2. Procédé selon la revendication 1 caractérisé en ce que grâce à la déformation du manchon à l'entrée les parois de l'enveloppe (3) restent écartées l'une de l'autre et en ce que cet écart se remplit pratiquement sous l'effet du retrait qui vient ensuite par épaississement des parois de l'enveloppe (3).

3. Procédé selon l'une des revendications 1 ou 2 caractérisé en ce qu'avant le retrait et de préférence avant la déformation de l'entrée du manchon on dispose une bande ou un bloc d'adhésif fondant à la chaleur.

4. Procédé selon l'une des revendications précédentes caractérisé en ce que la ou les fiches (10, 11) et/ou la ou les parties creuses sont enfoncées dans des trous préformés de l'enveloppe (3).

5. Procédé selon l'une des revendications précédentes caractérisé en ce que les trous sont produits par les fiches (10, 11) et/ou par les parties creuses.

6. Procédé selon l'une des revendications précédentes, caractérisé par lors du retrait à chaud c'est d'abord la partie déformée de l'enveloppe dans la région des fiches et/ou des parties creuses qui est rétrécie.

7. Procédé selon l'une des revendications précédentes, caractérisé en ce que des plaques métalliques (12, 13) sont fixées sur les faces extérieures de l'enveloppe (3) par les fiches (10, 11) et/ou par les parties creuses.

8. Dispositif pour former une liaison étanche entre le manchon rétréci à la chaleur et au moins deux substrats allongés (1, 2), dans lequel à l'entrée des substrats dans le manchon une enveloppe (3) rétrécissant à la chaleur constituant le manchon est ajustée sur la paroi externe des substrats et les parties d'enveloppe (3) entre les substrats (1, 2) sont déformés par les moyens adéquats (10, 11) de façon à former des canaux (8, 9) pour les substrats (1, 2), caractérisé en ce que lesdits moyens sont constitués d'au moins une fiche (10, 11) avec une tête (15) et un axe (16), l'axe (16) étant pourvu à sa surface externe de moyens (17, 18) pour le maintien par autoblocage avec une partie creuse (13).

9. Procédé selon la revendication 8, caractérisé en ce que plusieurs éléments en forme d'anneau orientable sont prévus sur l'axe (16) de la fiche (10, 11) et en ce que l'ouverture de la partie creuse (13) comporte des encoches circulaires correspondantes dans lesquelles les éléments (17) orientables lors de l'enfichage viennent se bloquer à ressort.

10. Procédé selon la revendications 8, caractérisé en ce que la tige (16) de la riche (10, 11) est formée sous forme d'un doublet en V (18, 19), et en ce que l'ouverture de la partie creuse (13) a son diamètre tel que le diamètre (18) de l'extrémité libre de l'axe (16) dans l'état écarté soit plus grand que le diamètre de l'ouverture.

11. Procédé selon l'une des revendications 8 à 10 caractérisé en ce que la partie creuse est constituée par une plaque métallique (12, 13) avec au moins un alésage.

12. Procédé selon la revendication 8 caractérisé en ce que la partie creuse est vissée sur la tige (26).

13. Procédé selon l'une des revendications 8 à 12 caractérisé en ce que la fiche (10, 11) et/ou la partie creuse (20) est en plastique avec une température de ramollissement plus élevée que la température de retrait.

## Claims

1. Method of forming a tight joint between a heatshrunk splice box and at least two elongate substrates (1, 2), the splice box being in contact as far as possible with the outer surface of the substrates (1, 2) in the entry region of the substrates (1, 2) into the splice box, wherein the substrates (1, 2) are arranged in a heat-shrinkable sheathing (3) and two regions of the wall of the sheathing (3) are mutually opposite between the substrates (1, 2), and wherein the sheathing (3) is heated and wherein the entry region of the splice box is deformed between the substrates (1, 2) by bringing the wall regions close together to form channels (8, 9) for the substrates (1, 2), characterized by the combination of the following features:

a. the material used for the sheathing (3) is a plastic tape with at least one inverted fabric layer (7) located within the wall of the sheathing (3), and

b. the deformation of the splice box in the entry region is effected by at least one insertion element (10, 11) which is taken from one side through both walls and which is fixed in a self-locking manner on the other side of the second wall or in a hollow part or by means of a hollow part.

2. Method according to Claim 1, characterized in that, on deformation of the splice box in the entry region, the walls of the sheathing (3) remain at a mutual distance and that the distance is almost filled up during the subsequent shrinkage by the increase of the wall thickness of the sheathing wall (3).

3. Method according to Claim 1 or 2, characterized in that, before the shrinkage and preferably before the deformation of the splice box in the entry region, a stripe or block of hot-melt adhesive is introduced between the substrates (1, 2) into the entry region.

4. Method according to Claim 1 or one of the subsequent claims, characterized in that the insertion element (10, 11) or the insertion elements (10, 11) and/or the hollow part or the hollow parts is or are taken through previously made holes in the sheathing (3).

5. Method according to Claim 1 or one of the subsequent claims, characterized in that the holes are produced by the insertion parts (10, 11) and/or hollow parts.

6. Method according to Claim 1 or one of the subsequent claims, characterized in that, during the heat shrinkage, the deformed region of the sheathing (3) is first shrunk in the region of the insertion parts (10, 11) and/or hollow parts.

7. Method according to Claim 1 or one of the subsequent claims, characterized in that metal plates (12, 13) are fixed on the outward-pointing surfaces of the sheathing (3) by the insertion parts (10, 11) and/or the hollow parts.

8. Device for forming a tight joint between a heatshrunk splice box and at least two elongate substrates (1, 2), wherein a heat-shrinkable sheathing (3) forming the splice box is in contact as far as possible with the outer surface of the substrates in the entry region of the substrates into the splice box and the regions of the sheathing (3) located between the substrates (1, 2) are deformed by suitable means (10, 11) in such a way that channels (8, 9) for the substrates (1, 2) are formed, characterized in that the means consist of at least one insertion part (10, 11) with a head (15) and shank (16), the shank (16) having, on the outer surface, means (17, 18) for self-locking fixing by means of a hollow part (13).

9. Device according to Claim 8, characterized in that a plurality of annular deflectable elements (17) are arranged on the shank (16) of the insertion part (10, 11), and that the aperture of the hollow part (13) has corresponding annular grooves into which the deflectable elements (17) engage on assembly.

10. Device according to Claim 8, characterized in that the shank (16) of the insertion part (10, 11) is designed in the manner of an expanding dowel (18, 19) and that the diameter of the aperture of the hollow part (13) is such that a diameter widening (18) located at the free end of the shank (16) is, in the expanded state, greater than the diameter of the aperture.

11. Device according to Claim 8 or one of the subsequent claims, characterized in that the hollow part is a metal plate (12, 13) having at least one bore.

12. Device according to Claim 8, characterized in that the hollow part (20) is screwed upon the shank (16).

13. Device according to Claim 8 or one of the subsequent claims, characterized in that the insertion part (10, 11) and/or hollow part (20) consist of a plastic having a softening temperature which is higher than the shrinkage temperature.

Fig 1

Fig 2

Fig 3

Fig 4

Fig 5

Fig 6